# EUROPEAN PATENT APPLICATION

(11) **EP 4 548 989 A1**
(43) Date of publication of application: **07.05.2025**
(21) Application number: 24206715.5
(22) Date of filing: 15.10.2024
(51) Int. Cl.: A63F 13/75, A63F 13/87, A63F 13/67, A63F 13/79

(54) **BAD ACTOR DETECTION SYSTEM AND METHOD**

(30) Priority: 01.11.2023 GB 202316743
(71) Applicant: Sony Interactive Entertainment Inc., Tokyo 108-0075 (JP)
(72) Inventor: BIGOS, Andrew, London, W1F 7LP (GB); LEONARDI, Rosario, London, W1F 7LP (GB); TAN, Bay Lee, London, W1F 7LP (GB); SUGANUMA, Atsushi, London, W1F 7LP (GB)
(74) Representative: D Young & Co LLP

(57) **Abstract**

A method is disclosed of detecting whether a first user is a bad actor within a platform network, in which the platform network enables interactions between individuals within video games, the method comprising the steps of measuring for the first user one or more selected from the list consisting of at least a first a game-agnostic behaviour metric that measures an investment of effort by the first user in interactions with other individuals; and at least a first a game-dependent behaviour metric that measures in-game patterns of interaction with other individuals by the first user, comparing the or each metric with an average or reference metric for a typical individual, and where a difference in the comparison or a combination of the comparisons meets a first criterion, treating this as indicative that the first user may be a bad actor.

## Description

### BACKGROUND OF THE INVENTION

### Field of the invention

The present invention relates to a bad actor detection system and method.

### Description of the Prior Art

Known anti-spam systems in email networks can detect parallel instances of emails being sent, either due to receiving multiple similar emails for multiple end-users, or by identifying characteristic traffic emanating from a particular source. In addition, the suspicious nature of some spam emails themselves can be used to automate detection of likely spam emails.

Meanwhile, on other networks such as a videogame platform online network, the business model of spamming to identify vulnerable individuals is generally not available because in most cases these networks do not facilitate the generation of large volumes of messages by normal users. Instead, scammers typically engage with users directly as a first step. As a result, existing anti-spam techniques are typically not of use in protecting individuals against scamming within such networks.

Embodiments of the present invention seek to address, mitigate, or alleviate this problem.

### SUMMARY OF THE INVENTION

Various aspects and features of the present invention are defined in the appended claims and within the text of the accompanying description.

In a first aspect, a method of detecting whether a first user is a bad actor is provided in accordance with claim 1.

In another aspect, a system adapted to detect whether a first user is a bad actor is provided in accordance with claim 12.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figures 1A-1C are schematic diagrams of interactions by individuals within a platform network at different times, in accordance with embodiments of the present description;
- Figure 2 is a schematic diagram of a system adapted to detect whether a first user is a bad actor, operating in conjunction with multiple client devices, in accordance with embodiments of the present description;
- Figure 3 is a flow diagram of a method of detecting whether a first user is a bad actor in accordance with embodiments of the present description.

### DESCRIPTION OF THE EMBODIMENTS

A bad actor detection system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

It will be appreciated that a bad actor within a videogame platform online network (hereafter for brevity a 'platform network') has a similar aim to a conventional email scammer - they need to reach a lot of individuals at a low cost (whether in terms of time and/or money) in order to identify the vulnerable ones they should invest further time and/or money in - but in the case of the platform network, they cannot normally do so using a mass communication such as spam email, and instead have to do so through individual interaction ('in person').

As a result, their in-person behaviour within the platform network is likely to be such that it emphasises short interactions (or exposure to large numbers of individuals) over other activities available on the platform network, compared to other users of that network. This is so that they can aim for greater exposure to potential victims at a low cost per victim.

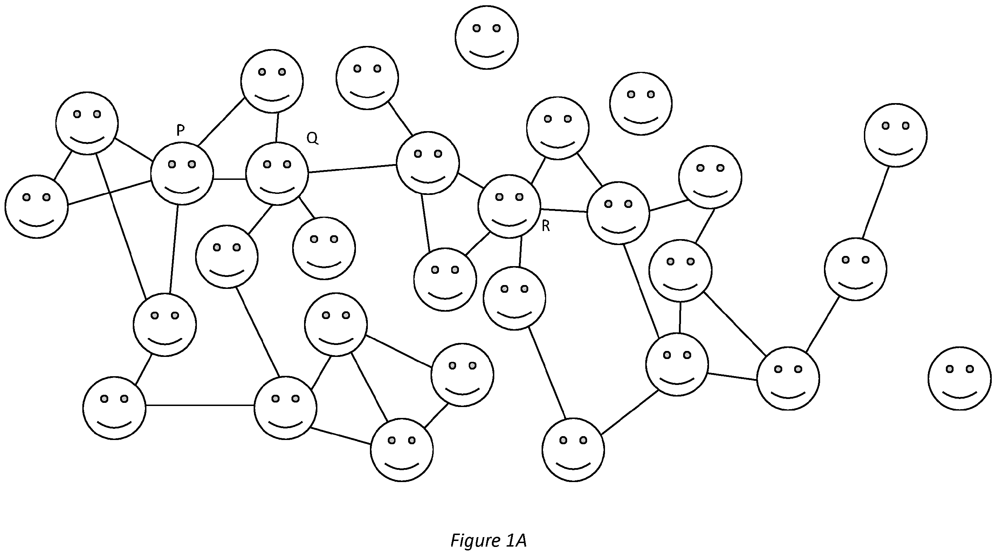

Referring now to the drawings, wherein like reference numerals designate identical or corresponding parts throughout the several views, Figure 1A shows a schematic illustration of individual interaction within a predetermined period within the platform network is illustrated. Individuals are indicated by faces, and interactions by lines. What can be seen is a number of relatively small overlapping groups of connections between individuals. For the sake of illustration, most of the individuals have between two and five connections with others during this period.

Within the overall group, three individuals (labelled P, Q and R) have five connections. These individuals can be said to be potentially operating in a manner consistent with a bad actor seeking to maximise connections; but with no other indicators, the individuals could simply be relatively gregarious.

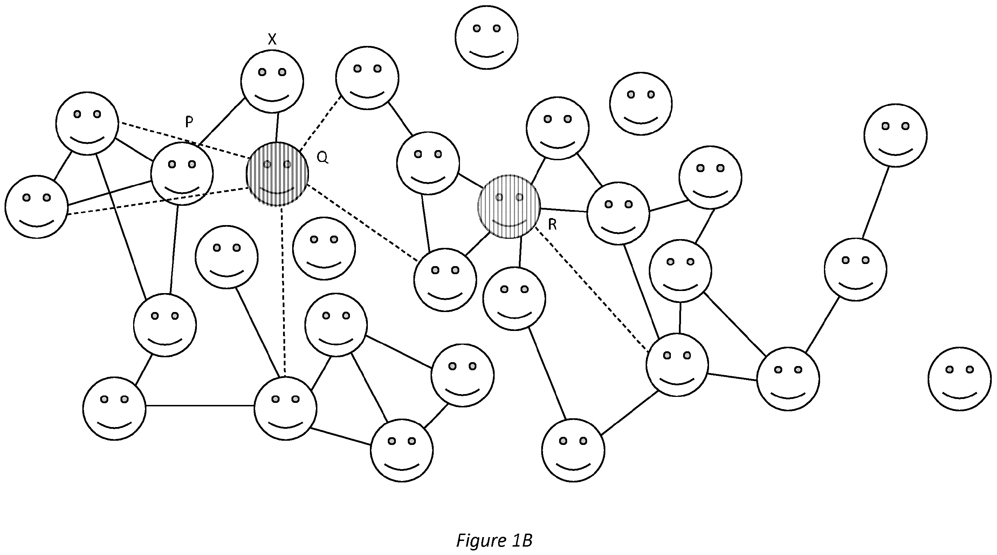

Turning to Figure 1B, in a subsequent period (potentially overlapping with the proceeding period), individual R has added one further connection to their group but has maintained contact with the rest of their existing group. As such this appears consistent with an individual who is gregarious and investing time in multiple other people. Meanwhile individual Q has dropped the majority of their previous connections and established a large number of new connections. This behaviour does appear consistent with a bad actor seeking to maximise low investment interactions with individuals, but alternatively could indicate that a user has finished playing one game and started another and so has changed interest groups, or accidentally joined a group with which they had nothing in common, before finding a new one. Potentially suspicious behaviour in this change of connections also includes dropping P, but connecting to some of P's own connections; this could appear to be inconsistent with normal social interactions and also with swapping between game or interest groups, and instead with mining users for further contacts.

Finally individual P has maintained all of their previous connections except for the one with Q which was dropped at Q's instigation.

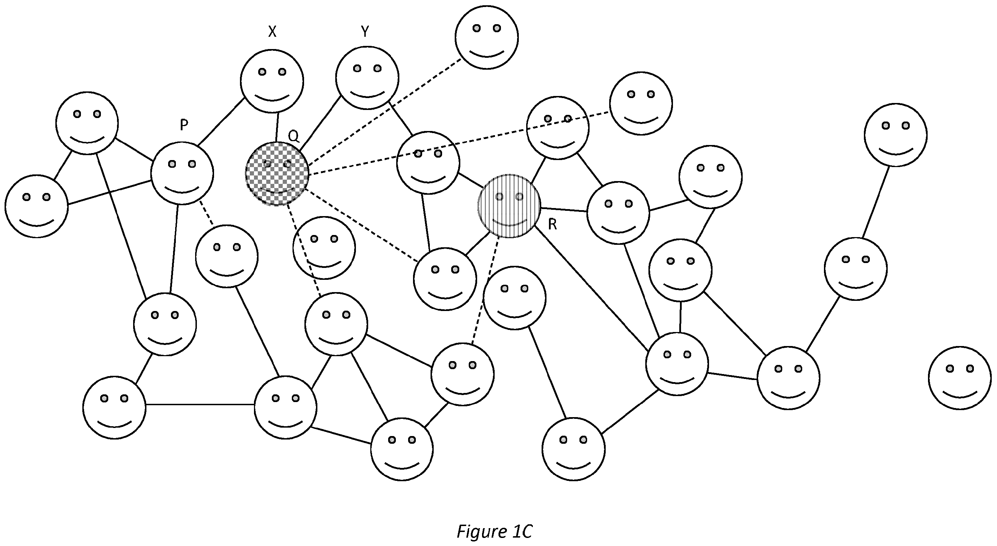

Next, turning to Figure 1C, in a subsequent period (potentially overlapping with the proceeding period), individual P has made one new connection, bringing their average number of social contacts back up to their original count. Meanwhile individual R has dropped one connection and made another; however in relation to the total number of contacts they are actively maintaining this is a proportionately small turnover in contacts.

Meanwhile Q. has again dropped a significant proportion of their contacts whilst maintaining communication with individuals X and Y. Potentially depending on other activities such as gameplay, this no longer appears consistent with finishing playing one game and starting another, or again accidentally joining an inappropriate group, and appears more consistent with a systematic attempt to maximise their interactions at lost cost. In this case potentially suspicious behaviour includes connecting with individuals who are previously not heavily participating in the social network, or who were at a significant remove within the network from Q's previous connections. This suggests a random or systematic progression through the network of individuals that is unrelated to organic social interaction.

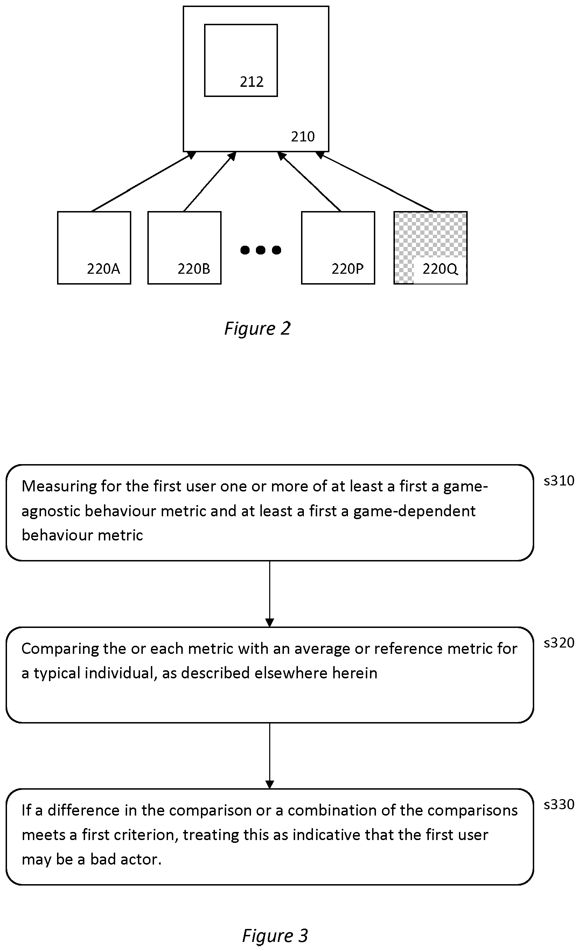

Accordingly, and referring now also to Figure 2, in embodiments of the present description a server 210 functioning as a platform network administrator is configured (for example by suitable software instruction to a processor 212 of the server) to evaluate the likelihood that a first user on the platform network is a bad actor, in the sense of being someone attempting to identify an individual for an interaction (not necessarily on the platform network itself) that is intended to cause harm to that individual, for example through fraud or identity theft.

To a first approximation, the platform network administrator monitors the absolute number of individuals with which a first user interacts, as an absolute number metric. As noted previously, a bad actor will typically interact with more individuals than a normal member of the network as a consequence of their business model.

To a second approximation, the platform network administrator may also monitor the absolute number and/or proportion of individuals that the first user stops interacting with; in other words an absolute or proportional churn of individuals with which they interact, as a turnover or churn metric. As noted previously, a bad actor will typically drop individuals quickly who do not represent a potential return on investment of time.

To an alternative or additional second approximation, the platform network administrator may also monitor the average duration or amount of interaction between the first user and individuals with whom they interact, as a duration or time-cost metric. Similarly as noted previously, a bad actor will typically keep the total amount of interaction short when initially assessing individuals.

To a third approximation, the network platform administrator may also monitor the content of the interactions, determine if the first user is using consistent patterns of interaction, or using keywords or phrases that may be considered of concern, as a content metric. However, this approach may be computationally very intensive, particular in the case of spoken interactions, and may also be considered intrusive by many individuals even if the monitoring is limited to public forms. Nevertheless a certain subset of terms may be scanned such as potential web or email addresses, or common workarounds for masking such addresses such as using 'my[at]address-dot-c0m' , which are indicative of the first user trying to move the other individual into an interaction away from the platform network, and which may be treated as equivalent to making a friend request.

The monitoring to a first or second approximation may continue over time in a manner such as that illustrated in relation to figures 1A-C. For example, interactions counts and optionally churn and/or interaction duration over successive (potentially overlapping) periods of activity, such as an hour, day, or week. Optionally the activity can be normalised to the amount of time the first user is logged in and showing signs of activity.

A first user who is a bad actor will diverge from normal usage patterns (as defined by one or more of the metrics herein such as number of individuals interacted with, churn of individuals, duration of interactions with individuals, and the like) over time as a consequence of their business model.

However, it may take some time to identify such a divergence with enough certainty to take any action that may be adverse to the first user if it turns out they are innocent. Meanwhile it is desirable to reduce the amount of time required to identify such a bad actor, since in the meantime they may cause harm to, or at least inconvenience, other individuals on the platform network.

Accordingly, in embodiments of the present description the server can make use of the fact that the platform network provides specific additional functionality that also has normal usage patterns, and furthermore usage patterns that would either represent a significant cost in time for a bad actor to adopt, or be difficult for a bad actor to mimic.

In particular, the platform network has a focus on playing videogames and typically enables interactions with strangers primarily through such videogames. As a result, a bad actor will likely need to interact with users at least initially within the context of one or more such videogames.

As a result a further approximation the server may evaluate the nature of the interactions with and turnover/churn of individuals in the context of a video game.

For example, many games include canned phrases for certain events, but these would be of little use to the bad actor beyond raising their profile; rather, a bad actor is more likely to type or speak their own messages. Furthermore, they are likely to do so away from the action or separate from particular in game events such as winning or losing or individually defeating or being defeated by an individual.

In addition, a bad actor may send friend requests (inviting private chat outside of a game context) after relatively few interactions in-game.

Optionally, a machine learning model can learn to correlate one or more game state indicators with communications to identify normal communication patterns within the game; where a first user's communications do not fit such a pattern, the machinery model may identify this, for example through a prediction or comparison error when predicting or comparing the first user's communications with the learned patterns. Such machine learning models may be game specific, level specific, and/or country, language, and/or demographic specific. Such models may also predict expected rates of friend requests and expected levels of pre-request communication. In this way such a model can represent patterns of communication behaviour specific to an individual videogame and optionally also to the other specific aspects mentioned herein, making it relatively difficult for the bad actor to learn how to blend in with conventional users within any particular game title and still initiate enough interactions to maintain a viable business model.

Similarly turnover of interactions may be different for different games; for example in multiplayer games with individual co-op or death-match rounds, it is not unusual to switch between different instances of the game between rounds; therefore the turnover of interactions within those individual instances may be ignored, or may be ignored if the interactions used canned phrases, for example.

By contrast a bad actor may quit an instance of the game during a round, in order to seek another instance. This behaviour may also be similar to so-called 'rage quitting', but a bad actor may do so more systematically than someone who simply frustrated with the outcome of a particular game instance.

Meanwhile in other game modes that may be an expectation to stay together for a particular quest for example. Again a user who systematically joins and leaves quests before they are completed may be behaving in a manner consistent with a bad actor.

Combining interactions and turnover in the context of a game, would require a bad actor to behave like a normal user in order to avoid being identified; as a result they would have difficulty inviting a large number of new friends or interacting with a large number of individuals, particularly using their own script, within short timeframes; this makes it difficult for a bad actor to maintain their business model as it increases the initial broad investment required to identify a small proportion of vulnerable individuals.

In a similar vein, different games may have different ratios of active play to chat, and also different events or patterns of play within the game may be associated with different ratios of active play to chat, and with different chat content (whether canned or free text/speech).

Therefore again a bad actor may be identified if they have a lower ratio of play to chat than is normal within the game. Again a machine learning model may be used to correlate chat density during game play in order to identify typical levels and changes of chat ratio as a function of game state. As with the other models that game state can be as simple or sophisticated as desired; for example it may simply differentiate start, during, and end of a game, or may be more finely granulated for example looking at progress through a game or through a quest, or may also include certain key events within the game as a whole such as the scoring of a goal or the capturing of a flag, or certain key events in relation to individual users such as being killed or taking the lead in a race.

Since a bad actor needs to communicate a lot in order to increase/maximise their interactions, it will be difficult for them to maintain a ratio of play to chat that is consistent with other players. It will be appreciated that such chat ratios may be considered similar to and part of the chat patterns discussed elsewhere herein.

The above three metrics of chat and invite patterns, turnover patterns, and chat ratios may be more generally and collectively referred to as game-context based chat metrics, and serve to distinguish bad actors from other users because of the difficulty in maintaining the business model of a bad actor within the typical chat patterns of a videogame environment.

It will be appreciated that videogames provide scope to measure other aspects of user interaction that would not make sense within an email based spamming scheme; for example within a videogame it is possible to determine whether a first user tries to interact with individuals within the videogame environment separately and sequentially; this would be consistent with trying to determine if an individual is a vulnerable individual without inviting comment or alarm from other individuals in the game environment; since it is more likely than not that any given individual is not a venerable individual, then a bad actor may wish to avoid having multiple individuals in their audience at any one time. Conversely, it is also possible to determine whether a first user interacts with multiple individuals, and then quits the environment; this can be seen as consistent with a bad actor determining that a particular group of individuals has been 'spoiled' for them by an adverse response, and so they are cutting their losses. Similarly, some regions of a game may lend themselves more easily to social interaction than others; for example there may be a hub region where players assemble to put together groups to embark on quests, or where they return after a quest or after being killed, or where it is possible to trade; a bad actor may spend more time in these regions than in regions that involve activities that militate against chat, such as for example fighting a boss or exploring an empty map region. By contrast legitimate players of the game are likely to do these things to a similar extent to each other.

Such metrics may be more generally referred to as location or proximity-based metrics (or more generally spatial metrics), and serve to distinguish any spatial aspect of typical interactions and those of bad actors within the game environment.

Again, a machine learning model may be used to characterise such location or proximity based metrics, and subsequently to characterise or predict or predict the likelihood of one individual's interactions over a period of time or over multiple periods of time being consistent with those of a bad actor.

In addition to performing such measurements as a function of predetermined periods of time such as one hour, one day, or one week, the predetermined period of time may (or may also in parallel) be measured as the cumulative absolute or proportional amount of time spent interacting with an individual before sending them a friend request; often the acceptance of a friend request is the end goal for the bad actor, as this then enables them to have an ongoing and private one-to-one chat with the potentially vulnerable individual.

Hence the server may characterise the behaviour of the first individual both in terms of their interaction with many individuals, in terms of one or more of interaction counts, interaction churn, and interaction duration, and optionally in terms of one or more of game-context based chat metrics, and coexistence or proximity based metrics, determine if they are behaving like a typical individual on the platform network, or like a bad actor.

Alternatively or in addition, the server can characterise the behaviour of the first individual in terms of their interaction with one individual, for example in terms of one or more of game-context based chat metrics, and coexistence or proximity based metrics, to determine if they are behaving like a typical player in the platform network, or like a bad actor.

Optionally, the two characterisations can be combined so that if a first individual appears to exhibit behaviours similar to those of a bad actor (but may not for example yet have triggered a particular threshold at which they are deemed to be one), they may trigger a lower threshold at which they individual interactions start to be tracked, and/or that bias or change a detection threshold for detecting bad actor behaviour when evaluating their interaction with one individual.

References have been made herein to the use of machine learning models, but it will be appreciated that other means of modelling user interactions may also be considered, such as the generation of statistics for a first user capturing one, some, or all of the features described elsewhere herein for comparison with reference statistics for player populations at large, optionally subject to the specific subgroups described elsewhere herein such as game and demographic specific subgroups.

Hence in summary, the server 210, which may be administering the platform network, or a part thereof, or receiving reports from servers that are administering the platform network or a part thereof (for example a server administering a particular game supported by the platform network), may track the interactions of a plurality of individuals.

For a given first user amongst these individuals, their behaviour may be evaluated according to one or more of the metrics from among those herein, including but not limited to:
absolute number metric, turnover or 'churn' metric, duration or time cost metric (collectively game agnostic behaviour metrics), which may each be thought of as a (respective) measure of investment of effort by the first user in interactions with other individuals;
and/or any of the game-context based chat metrics, or coexistence or proximity-based metrics (collectively game dependent behaviour metrics), which may each be thought of as measuring (respective) in-game patterns of interaction with other individuals by the first user.

These metrics may be evaluated for example by comparing the metrics for a first user against average metrics for a similar cohort of users (for example users with a similar user profile, and/or similar game history or current use, or users in a similar geographical region whether based on city, country, or wider), or comparing against average metrics for all users. These can then be considered representative of a typical individual as appropriate to the comparison at issue. It will be appreciated that potentially different metrics may be evaluated against different cohorts based on empirical evaluation.

The comparisons may then be combined and evaluated against a threshold. It will be appreciated that different thresholds may be used for different metrics or different combinations of metrics. In any event, if a first user's comparison or combined comparisons exceed a first threshold, they may be considered to be a bad actor and mitigating actions may be implemented.

These may include for example preventing the ability to make friend requests either for a period of time or permanently, preventing the ability to use voice and/or text chat for a period of time or permanently, and suspending access to the platform network for a period of time or permanently.

In addition, other individuals who have accepted or optionally received friend requests from the first user bad actor, optionally within a predetermined proceeding window of time, may be informed that the first user has met a criterion for behaviour that is consistent with the behaviour of a bad actor.

Similarly other individuals who have been in communication with the bad actor potentially for longer than most individuals (which may be assumed to be indicative of investment by the bad actor in these individuals) may also be informed that the first user has met a criterion for behaviour that is consistent with the behaviour of a bad actor, even if they have not yet received friend requests.

This enables the other individuals to evaluate their previous, current and possible future interactions with the first user in light of this knowledge.

Hence referring back to figure 1C, individuals X and Y may be informed that individual Q has met a criterion for behaviour that is consistent with the behaviour of a bad actor.

It will be appreciated that a first user may behave in different ways at different times or in ways the cumulative point to being a bad actor over time. Whilst it is beneficial to positively and confidently identify a bad actor as soon as possible, it may still be useful to implement some mitigations earlier. Hence for example in Figure 1B, individual R may be behaving in a manner that is ambiguously like a gregarious person or a bad actor (denoted by light hatching). In this case, rather than notifying others without a clear decision, optionally for example additional metrics relating to individual R may be started or obtained, to help improve the detection (this approach reduces the number of individuals for whom a more complete set of metrics may need to be maintained or evaluated). Hence in this case one or more trigger metrics are used for each individual can compared with an average or other expected value to detect whether further metrics are necessary. Meanwhile at this stage individual Q is also still ambiguous but has more divergent metric than individual R (denoted by darker hatching). In this case, like individual R they may also have more metrics derived for them (optionally more than for R) and optionally one or more precautionary mitigations added such as triggering a re logging-in or review of the user profile, or a request for a password reset, in case the account has been hacked. As noted above, in figure 1C individual Q has been identified as a bad actor, and this is denoted by a chequerboard pattern in the figure. Meanwhile individual R's status has not changed.

Overall, the techniques herein are intended to make an in-person spamming-style model of interaction within the platform network prohibitively expensive in terms of a bad actor's time, by making it difficult to interact with a large number of people in a cost-effective manner whilst remaining undetected by one or more of the metrics described elsewhere herein.

Notably, it may prove uneconomic for a bad actor to operate within the platform network even when interacting with a number of people significantly larger than the average individual does; therefore the thresholds for detection do not necessarily need to be so low as to cause common false positives; rather they can be tuned to levels that make the successful identification of vulnerable users uneconomic within the network. Optionally, the platform network administrators may include 'mystery shopper' style honeypot users or AI chat bots both to further absorb the bad actors time, and potentially also to act as a means to identify the effective success rate of bad actors within the platform network; once bad actor behaviour has been identified more extensive interactions with honeypot users or AI chat bots, the previous interactions of those bad actors can be evaluated. Detection thresholds can then be adjusted so that the bad actor (or a higher proportion of the bad actors) would have been detected earlier / at a comparative behaviour closer to the norm for other individuals.

A bad actor may try to avoid detection by creating new accounts on a regular basis to avoid accumulating some or all of the metrics described herein to indicate they are bad actor. However again this account creation behaviour may be divergent from common behaviour on the platform network because typically accounts are physically aligned with client devices 220A,B,..P,Q (for example a videogame console). Whilst users can login to other consoles for example as guests, this is typically the exception rather than the norm. In particular it is unusual for more than half a dozen accounts to primarily use a single client device.

Hence, potentially in conjunction with one or more other metrics mentioned elsewhere herein, further metrics may include the number of accounts created on a given client device, how often an account is used on a different client device (in the event that a bad actor has a bank of client devices), and the distribution of profiles of the accounts created on a client device (for example a typical client device may have one or two adults and between one and three children associated with it; meanwhile the client device of a bad actor, for example client device 220Q, may have 15 adults associated with it). Collectively these may be referred to as account behaviour metrics and again may be compared against other cohorts of individuals to identify patterns consistent with the behaviour of bad actor. As with the techniques described elsewhere herein, the comparison may be used alone and/or in combination with one or more other metrics as described elsewhere herein to identify whether a first user is about actor.

Alternatively or in addition, instead of evaluating interactions by users, the server may similarly evaluate interactions by client devices (i.e. aggregate the behaviour of users from one device). This would make it harder to obfuscate the bad actor's behaviour on the basis of individual accounts.

Referring now to Figure 3, in a summary embodiment of the present description a method of detecting whether a first user is a bad actor within a platform network, in which the platform network enables interactions between individuals within video games (as described elsewhere herein), comprises the following steps.

In a first step s310, measuring for the first user one or more selected from the list consisting of:
i. at least a first a game-agnostic behaviour metric that measures an investment of effort by the first user in interactions with other individuals; and
ii. at least a first a game-dependent behaviour metric that measures in-game patterns of interaction with other individuals by the first user, as described elsewhere herein.

In a second step s320, comparing the or each metric with an average or reference metric for a typical individual, as described elsewhere herein.

And where a difference in the comparison or a combination of the comparisons meets a first criterion (such as a particular threshold difference amount, or characteristic difference of pattern), in third step s330, treating this as indicative that the first user may be a bad actor, as described elsewhere herein.

As noted elsewhere herein, an indication that the first user may be a bad actor may result in different responses or mitigating actions, optionally depending upon the comparison meeting different thresholds or criteria; for example it may result in evaluating other metrics to improve the rate at which the first user can be authoritatively categorised as a bad actor, and/or limiting the functionality accessible by the first user, and/or notifying at least some other individuals.

It will be apparent to a person skilled in the art that variations in the above method corresponding to operation of the various embodiments of the apparatus as described and claimed herein are considered within the scope of the present invention, including but not limited to that:
- the at least first game agnostic behaviour metric comprises one selected from the list consisting of an absolute number metric, descriptive of the number of individuals with which the first user interacts within a predetermined period, a turnover metric, descriptive of the absolute or proportional number of individuals that the first user stops interacting with within a predetermined period, and a time cost metric, descriptive of the amount of interaction between the first user and respective individuals with whom they interact, as described elsewhere herein;
- the at least first game dependent behaviour metric comprises a game-context based chat metric, descriptive of a pattern of communication between individuals during game play, as described elsewhere herein;
   - in this instance, the game-context based chat metric may optionally comprise evaluating a pattern of communication between the first user and one or more other individuals during game play, comparing the pattern with a reference pattern corresponding to communications between typical individuals within game play, and if a difference in the patterns meets a first criterion, treating this as indicative that the first user may be a bad actor, as described elsewhere herein;
   - similarly in this instance, the pattern of communication may optionally comprise one or more selected from the list consisting of the timing, in relation to in-game events, of the first user's interactions with another individual; the timing, in relation to in-game events, of the first user stopping interaction with another individual; the number of interactions by the first user with one individual before stopping interaction; the number of interactions by the first user with one individual before inviting a private interaction; the ratio of predefined in-game phrases to free-text phrases used by the first user; and the ratio of videogame play activity to chat-based activity by the first user, as described elsewhere herein.
   - Similarly in this instance, the evaluation of a difference in in-game communication patterns of the first user may comprise using a machine learning model, trained to correlate one or more game state indicators with patterns of normal communications between individuals within a game to model the pattern of communication, as described elsewhere herein;
- the at least first game dependent behaviour metric comprises a spatial metric, descriptive of how the first user navigates a video game to interact with other individuals, as described elsewhere herein;
   - in this instance, optionally the spatial metric is based upon one or more selected from the list consisting of the spatial relationship of an individual to one or more other individuals in-game when the first user interacts with that individual, the average number of individuals within an in-game interaction range when the first user interacts with an individual, and the distribution of in-game locations occupied by the first user when interacting with other individuals, as described elsewhere herein;
- for at least a first a game-agnostic behaviour metric, if a difference in the comparison or a combination of the comparisons meets a second criterion (e.g. a lower threshold or standard than the first criterion), then comparing at least a first a game-dependent behaviour metric with a corresponding average or reference metric for a typical individual - e.g. adding a (further) game-dependent behaviour metric to improve and/or speed up the ability to discriminate whether the first user is a bad actor, as described elsewhere herein; and
- the method comprises the steps of measuring at least a first property of the accounts associated with the same client device as the first user account, and comparing the or each measurement with an average or reference measurement for a typical client device; and where a difference in the comparison or a combination of the comparisons meets a third criterion (for example one relating to the number and/or composition of accounts associated with the device), treating this as indicative that the first user may be a bad actor, as described elsewhere herein.

It will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Hence in a summary embodiment of the present description, a system (e.g. a server 210, or any suitable device with access to the appropriate data) is adapted to detect whether a first user is a bad actor within a platform network, in which the platform network enables interactions between individuals within video games. The system comprising a processor (212) configured (for example by suitable software instruction to carry out the steps of measuring for the first user one or more selected from the list consisting of at least a first a game-agnostic behaviour metric that measures an investment of effort by the first user in interactions with other individuals; and at least a first a game-dependent behaviour metric that measures in-game patterns of interaction with other individuals by the first user, before comparing the or each metric with an average or reference metric for a typical individual, and where a difference in the comparison or a combination of the comparisons meets a first criterion, treating this as indicative that the first user may be a bad actor, as described elsewhere herein.

Instances of this summary embodiment implementing the methods and techniques described herein (for example by use of suitable software instruction) are envisaged within the scope of the application, including but not limited to that:
- the at least first game dependent behaviour metric comprises a game-context based chat metric, descriptive of a pattern of communication between individuals during game play, as described elsewhere herein;
- the at least first game dependent behaviour metric comprises a spatial metric, descriptive of how the first user navigates a video game to interact with other individuals, as described elsewhere herein; and
- the processor is configured to carry out the steps of measuring at least a first property of the accounts associated with the same client device as the first user account; comparing the or each measurement with an average or reference measurement for a typical client device; and where a difference in the comparison or a combination of the comparisons meets a third criterion, treating this as indicative that the first user may be a bad actor, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of detecting whether a first user is a bad actor within a platform network, in which the platform network enables interactions between individuals within video games,
the method comprising the steps of:
measuring for the first user one or more selected from the list consisting of:
i. at least a first a game-agnostic behaviour metric that measures an investment of effort by the first user in interactions with other individuals; and
ii. at least a first a game-dependent behaviour metric that measures in-game patterns of interaction with other individuals by the first user,
comparing the or each metric with an average or reference metric for a typical individual;
and where a difference in the comparison or a combination of the comparisons meets a first criterion,
treating this as indicative that the first user may be a bad actor.

2. The method of claim 1, in which the at least first game agnostic behaviour metric comprises one selected from the list consisting of:
i. an absolute number metric, descriptive of the number of individuals with which the first user interacts within a predetermined period;
ii. a turnover metric, descriptive of the absolute or proportional number of individuals that the first user stops interacting with within a predetermined period; and
iii. a time cost metric, descriptive of the amount of interaction between the first user and respective individuals with whom they interact.

3. The method of claim 1 or claim 2, in which the at least first game dependent behaviour metric comprises a game-context based chat metric, descriptive of a pattern of communication between individuals during game play.

4. The method of claim 3, in which the game-context based chat metric comprises
evaluating a pattern of communication between the first user and one or more other individuals during game play;
comparing the pattern with a reference pattern corresponding to communications between typical individuals within game play; and
if a difference in the patterns meets a first criterion, treating this as indicative that the first user may be a bad actor.

5. The method of claim 4, in which the pattern of communication comprises one or more selected from the list consisting of:
i. the timing, in relation to in-game events, of the first user's interactions with another individual;
ii. the timing, in relation to in-game events, of the first user stopping interaction with another individual;
iii. the number of interactions by the first user with one individual before stopping interaction;
iv. the number of interactions by the first user with one individual before inviting a private interaction;
v. the ratio of predefined in-game phrases to free-text phrases used by the first user; and
vi. the ratio of videogame play activity to chat-based activity by the first user.

6. The method of claim 4 or claim 5 comprising the step of:
using a machine learning model, trained to correlate one or more game state indicators with patterns of normal communications between individuals within a game to model the pattern of communication, to evaluate a difference in in-game communication patterns of the first user.

7. The method of any preceding claim, in which the at least first game dependent behaviour metric comprises a spatial metric, descriptive of how the first user navigates a video game to interact with other individuals.

8. The method of claim 7, in which the spatial metric is based upon one or more selected from the list consisting of:
i. the spatial relationship of an individual to one or more other individuals in-game when the first user interacts with that individual;
ii. the average number of individuals within an in-game interaction range when the first user interacts with an individual; and
iii. the distribution of in-game locations occupied by the first user when interacting with other individuals.

9. The method of any preceding claim, in which,
for at least a first a game-agnostic behaviour metric,
if a difference in the comparison or a combination of the comparisons meets a second criterion,
then comparing at least a first a game-dependent behaviour metric with a corresponding average or reference metric for a typical individual.

10. The method of any preceding claim, comprising the steps of:
measuring at least a first property of the accounts associated with the same client device as the first user account; and
comparing the or each measurement with an average or reference measurement for a typical client device; and
where a difference in the comparison or a combination of the comparisons meets a third criterion,
treating this as indicative that the first user may be a bad actor.

11. A computer program comprising computer executable instructions adapted to cause a computer system to perform the method of any one of the preceding claims.

12. A system (210) adapted to detect whether a first user is a bad actor within a platform network, in which the platform network enables interactions between individuals within video games,
the system comprising a processor (212) configured to carry out the steps of:
measuring for the first user one or more selected from the list consisting of:
i. at least a first a game-agnostic behaviour metric that measures an investment of effort by the first user in interactions with other individuals; and
ii. at least a first a game-dependent behaviour metric that measures in-game patterns of interaction with other individuals by the first user,
comparing the or each metric with an average or reference metric for a typical individual;
and where a difference in the comparison or a combination of the comparisons meets a first criterion,
treating this as indicative that the first user may be a bad actor.

13. The system of claim 12, in which the at least first game dependent behaviour metric comprises a game-context based chat metric, descriptive of a pattern of communication between individuals during game play.

14. The system of claim 12 or claim 13, in which the at least first game dependent behaviour metric comprises a spatial metric, descriptive of how the first user navigates a video game to interact with other individuals.

15. The system of any one of claims 12 to 14, in which the processor is configured to carry out the steps of:
measuring at least a first property of the accounts associated with the same client device as the first user account;
comparing the or each measurement with an average or reference measurement for a typical client device;
and where a difference in the comparison or a combination of the comparisons meets a third criterion,
treating this as indicative that the first user may be a bad actor.
